# EUROPEAN PATENT SPECIFICATION

(11) **EP 2 852 006 B1**
(45) Date of publication and mention of the grant of the patent: **01.11.2017**
(21) Application number: 14180518.4
(22) Date of filing: 11.08.2014
(51) Int. Cl.: H01R 24/58, H01R 31/00, H01R 31/06, H01R 13/00, H04M 1/725

(54) **Connection member for headset plug, headset jack and terminal device**
Verbindungselement für Kopfhörerstecker, Kopfhörer und Endgerätevorrichtung
Élément de connexion de fiche de casque d'écoute, dispositif terminal et prise de casque d'écoute

(30) Priority: 24.09.2013 CN 201310439607
(43) Date of publication of application: 25.03.2015
(73) Proprietor: Xiaomi Inc., Beijing 100085 (CN)
(72) Inventor: Gao, Yuan, Haidian District, Beijing (CN); Xu, Duo, Haidian District, Beijing (CN); Han, Gaocai, Haidian District, Beijing (CN)
(74) Representative: Hanna Moore + Curley

(56) References cited:
- US-A1- 2005 064 764

## Description

### CROSS REFERENCE TO RELATED APPLICATIONS

This application is based upon and claims priority to Chinese Patent Application No. 201310439607.5, filed on September 24, 2013, and published under publication number CN103475972 A.

### TECHNICAL FIELD

The present disclosure generally relates to the field of electronic technology, and more particularly, to a connection member for a headset plug, a headset jack and a terminal device.

### BACKGROUND

With the continuous development of terminal device technology, terminal devices, such as smart phones and tablet PCs, have become increasingly popular. More and more people use the terminal devices to work, study, entertain and communicate. The terminal devices are mostly equipped with a headset jack for providing the users with the function of connecting to a headset. The current headset plugs are standard plugs, for example, the headset plugs with a diameter of 2.5mm or 3.5mm, and under each standard, there are three-stage and four-stage headset plugs.

US 2005064764A1 shows a connection member for connection with a headset plug.

In order to improve users' experience, present terminal devices are becoming thinner, and the screens are becoming larger. This design brings a good experience to users. However, since the terminal devices are becoming thinner and the screens are becoming larger, it is difficult to coordinate the layout of the headset jack and the screen, which causes a contradiction.

### SUMMARY

In view of the above, the purpose of the present disclosure is to provide a connection member for a headset plug, a headset jack and a terminal device, in accordance with claims which follow, which can reduce the length of the portion of the headset plug to be inserted into the headset jack.

According to a first aspect of embodiments of the present disclosure, there is provided a connection member for connection with a headset plug, the headset plug defined by head end and a tail end portion thereof with at least one terminal arranged therebetween, each terminal defined by a width; whereby the connection member is adapted to reduce the length of the portion of the headset plug to be inserted into a corresponding headset jack, and so reduce the effective depth "m" of the headset jack, when connected with the headset plug, wherein, the connection member is defined by a hollow sleeve, having an inner diameter "r" adapted to receive an end portion of the headset plug, and wherein the connection member has at least one pin extending from an end portion thereof, so that when the connection member is connected with the headset plug, the at least one pin makes contact with at least one terminal of the headset plug inserted into the corresponding headset jack, and the height "h" of the sleeve being greater than or equal to the sum of widths of the terminals of the headset plug not inserted into the corresponding headset jack.

According to a second aspect of embodiments of the present disclosure, there is also provided a headset jack adapted to receive a headset plug, the headset plug defined by head end and a tail end portion thereof with at least one terminal arranged therebetween, each terminal defined by a width; whereby the headset jack has at least one contact point, and when the headset plug has been connected with a connection member defined by a hollow sleeve having an inner diameter "r" adapted to receive an end portion of the headset plug, and is not fully inserted into the headset jack, the at least one contact point makes contact with a pin or pins extending from the connection member, wherein the connection member is configured such that a respective pin thereof makes contact with at least one terminal of the headset plug near a head end or a tail end portion of the headset plug, whereby a terminal of the headset plug which is not inserted into the headset jack makes contact with the contact point in the headset jack via at least one pin of the connection member; and wherein, the effective depth "m" of the headset jack is the sum of widths of the terminals of the headset plug minus the widths of the terminals in contact with the pins of the connection member when the headset plug is connected to the connection member.

According to a third aspect of embodiments of the present disclosure, there is also provided a terminal device, whereby the terminal device comprises a headset jack adapted to receive a headset plug, the headset plug defined by head end and a tail end portion thereof with at least one terminal arranged therebetween, each terminal defined by a width; wherein, the headset jack has at least one contact point, and when the headset plug has been connected with a connection member defined by a hollow sleeve having an inner diameter "r" adapted to receive an end portion of the headset plug, and is not fully inserted into the headset jack, the at least one contact point makes contact with a pin or pins extending from the connection member, wherein the connection member is configured such that a respective pin thereof makes contact with at least one terminal of the headset plug near a head end or a tail end portion of the headset plug, whereby a terminal of the headset plug which is not inserted into the headset jack makes contact with the contact point in the headset jack via the at least one pin of the connection member; and wherein, the effective depth "m" of the headset jack is the sum of widths of the terminals of the headset plug minus the widths of the terminals in contact with the pins of the connection member when the headset plug is connected to the connection member. Further detailed embodiments are represented by dependent claims 2, 3, 5 and 7.

Other features and advantages of the present disclosure will be explained in the following specification, which may become apparent in part from the specification, or may be learned by implementing the present invention. The purposes and other advantages of the present disclosure may be achieved and obtained by the structure specified in the specification, claims and drawings.

It is to be understood that both the foregoing general description and the following detailed description are exemplary and explanatory only and are not restrictive of the present disclosure. Hereinafter, the technical solutions of the present disclosure are further described in detail through the drawings and embodiments.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure. In the drawings:
Fig. 1 is a schematic diagram illustrating a three-stage headset plug, according to an exemplary embodiment;
Fig. 2 is a schematic diagram illustrating a four-stage headset plug, according to an exemplary embodiment;
Fig. 3 is a schematic diagram illustrating that the headset plug is inserted when the headset jack is provided at the top of the terminal device, according to an exemplary embodiment;
Fig. 4 is a schematic diagram illustrating that the headset plug is inserted when the headset jack is provided at the side of the terminal device, according to an exemplary embodiment;
Fig. 5 is a schematic diagram illustrating an embodiment of a connection member, according to an exemplary embodiment;
Fig. 6 is a schematic diagram illustrating that the connection member is connected to the three-stage headset plug, according to an exemplary embodiment;
Fig. 7 is a schematic diagram illustrating that the headset plug shown in Fig. 6 is inserted into the terminal device having a headset jack on the top, according to an exemplary embodiment;
Fig. 8 is a schematic diagram illustrating another embodiment of a connection member, according to an exemplary embodiment;
Fig. 9 is a schematic diagram illustrating that the connection member shown in Fig. 8 is connected to the four-stage headset plug, according to an exemplary embodiment;
Fig. 10 is a schematic diagram illustrating that the headset plug shown in Fig. 9 is inserted into the terminal device having a headset jack on the top, according to an exemplary embodiment;
Fig. 11 is a schematic diagram illustrating that the headset plug is inserted into the terminal device having a headset jack on the front surface, according to an exemplary embodiment;
Fig. 12 is a schematic diagram illustrating an embodiment of a headset jack, according to an exemplary embodiment; and
FIG. 13 is a structural diagram of a terminal device, according to an exemplary embodiment.

Specific embodiments in this disclosure have been shown by way of example in the foregoing drawings and are hereinafter described in detail. The drawings and written description are intended to illustrate the inventive concepts to a person skilled in the art by referring to particular embodiments.

### DETAILED DESCRIPTION

The preferable embodiments of the present disclosure will be described in combination with the drawings.

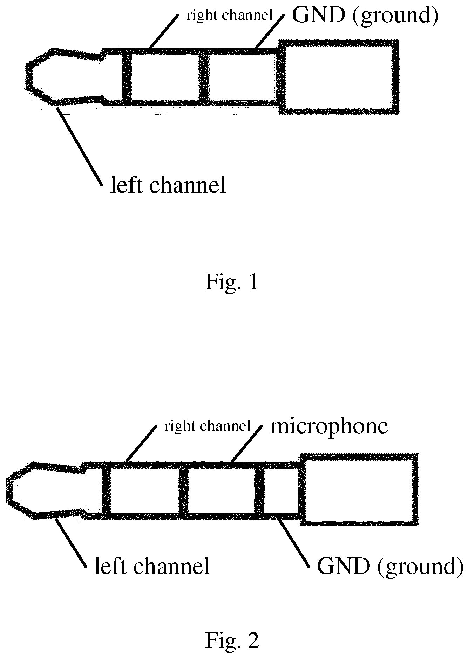

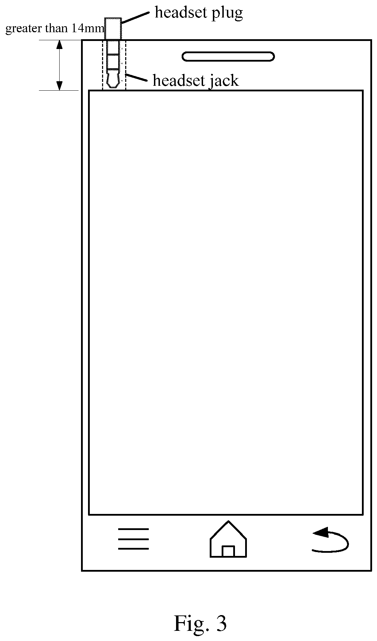

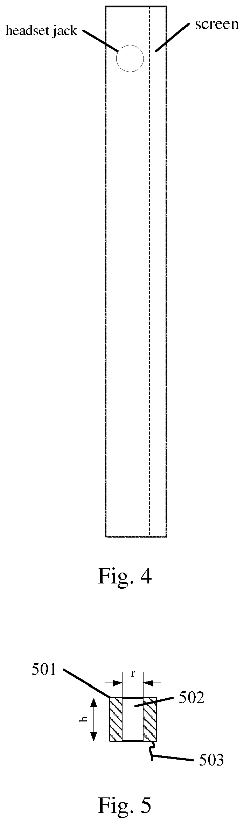

As shown in Fig. 1, which is a schematic diagram of a three-stage headset plug in the current technology, the headset plug has three terminals, which are respectively a left channel, a right channel and GND (ground). As shown in Fig. 2, which is a schematic diagram of a four-stage headset plug in the current technology, the headset plug has four terminals, which are respectively a left channel, a right channel, a microphone and GND (ground). The headset jack of a terminal device is a headset jack matched with the standard headset plug. Generally, in the terminal device, the layout of the headset jack and the screen may be as follows.
1. The headset jack is provided at the top or bottom of the terminal device and keeps away from the screen, as shown in Fig. 3, which is a schematic diagram of inserting the headset plug when the headset jack is provided at the top of the terminal device. For example, the headset jack is a headset jack matched with a 3.5mm headset plug, and the 3.5mm headset plug has a length of 14mm. Then, in order to keep the headset jack away from the screen, the area above or below the screen is set to be greater than 14mm.
2. The headset jack is provided at a lateral side of the terminal device (e.g., a mobile phone) and keeps away from the screen, as shown in Fig. 4. Such solution needs to increase the thickness of the terminal device such that the headset jack and the screen could be staggered in the thickness direction.

However, in the above-mentioned first solution, the area above or below the screen is too large, and in the second solution, the thickness of the terminal device will be increased, therefore, the current technology cannot achieve the desired design concept of an increasingly thinner terminal device and an increasingly larger screen.

The connection member for the headset plug proposed in the present disclosure has at least one pin. When the connection member is connected with the headset plug, the at least one pin of the connection member makes contact with at least one terminal of the headset plug near an end portion thereof.

In one embodiment, the connection member may be of any shape, and the form of connection with the headset plug may also be of any type, as long as the connection member has one pin which can make contact with at least one terminal of the headset plug near the end portion thereof when being connected with the headset plug.

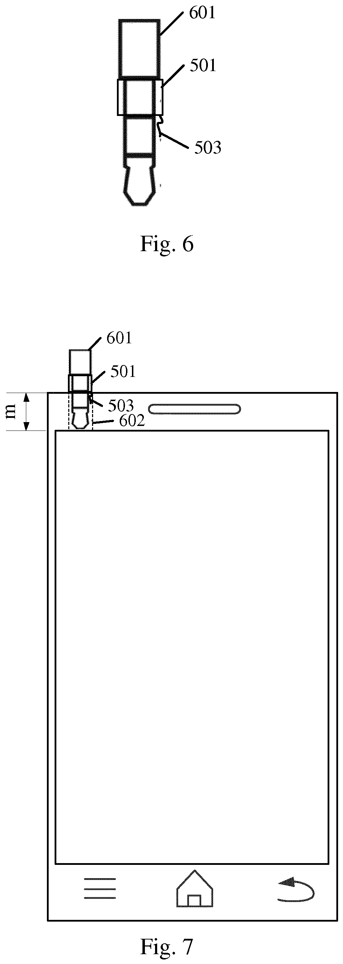

As shown in Fig. 5 which illustrates one embodiment of the connection member, in this embodiment, the connection member is a sleeve 501. The sleeve is hollow, as indicated by the reference sign 502 in Fig. 5. The inner diameter r of the sleeve coincides with the end portion of the headset plug, i.e., the sleeve can accommodate the end portion of the headset plug; and the height h of the sleeve is greater than or equal to the sum of widths of the terminals of the headset plug. The sleeve has a pin 503, and the pin is for example a clip. When the connection member is in use, the sleeve 501 is put on a tail of the three-stage headset plug, as shown in Fig. 6, and at this time, the pin 503 of the sleeve makes contact with one terminal of the headset plug 601 near the tail. As shown in Fig. 7, the headset plug 601 is inserted into the headset jack 602, and the pin 503 makes contact with a corresponding contact point in the headset jack 602 (the contact point in the headset jack is not shown in the drawing). In this embodiment, the headset plug is not fully inserted into the headset jack, and the terminal of the headset plug which is not inserted into the headset jack makes contact with the contact point in the headset jack via the pin of the connection member. As compared with Fig. 3, the portion of the headset plug which is inserted into the headset jack is short, therefore, the required depth m of the headset jack becomes relatively small. As compared with Fig. 3, the depth m is inevitably less than 14 mm, therefore, the screen of the terminal device configured with this headset jack can be set relatively large.

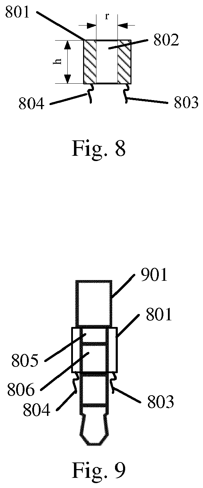

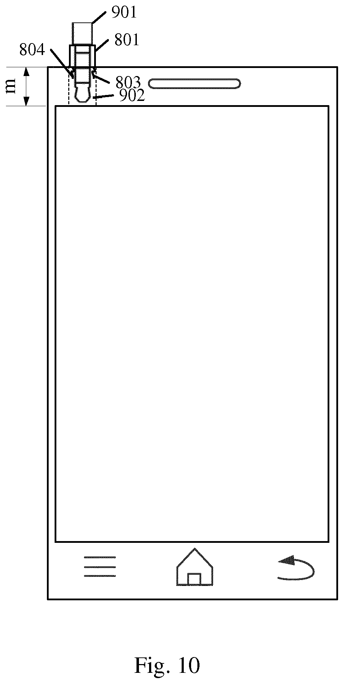

As shown in Fig. 8 which illustrates another embodiment of the connection member, in this embodiment, the connection member is also a sleeve 801. The sleeve is hollow, as indicated by the reference sign 802 in Fig. 8. The inner diameter r of the sleeve can accommodate the end portion of the headset plug; and the height h of the sleeve is greater than or equal to the sum of the widths of terminals of the headset plug. The sleeve has two pins 803 and 804. When the connection member is in use, the sleeve 801 is put on the tail of the headset plug 901, and as shown in Fig. 9, the four-stage headset plug 901 is taken as an example. At this time, the pins 803 and 804 of the sleeve are respectively in contact with two terminals 805 and 806 of the headset plug 901 near the tail. As shown in Fig. 10, the headset plug 901 is inserted into the headset jack 902, and the pins 803 and 804 of the sleeve 801 are respectively in contact with corresponding contact points in the headset jack 902 (the contact points in the headset jack are not shown in the drawing). In this embodiment, the headset plug is not fully inserted into the headset jack, and the terminals of the headset plug 901 which are not inserted into the headset jack 902 are in contact with the contact points in the headset jack 902 via the pins of the connection member 801. Therefore, as compared with the condition that the headset plug is fully inserted into the headset jack, the required depth m of the headset jack becomes relatively small. Therefore, the screen of the terminal device configured with this headset jack can be set relatively large.

In other embodiments of the present disclosure, when the headset jack is provided in the thickness direction of the terminal device, the connection member proposed in the present disclosure may also be applied when a headset with a standard headset plug is in use.

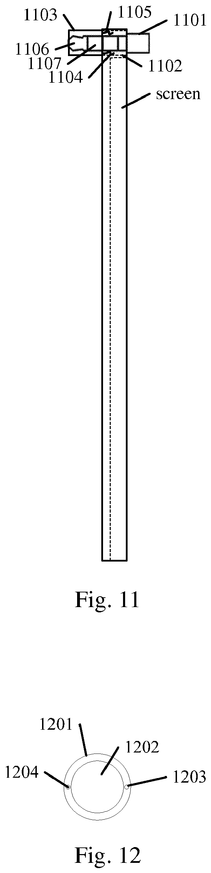

Furthermore, when using the connection member, it may also be possible to contact the pin of the connection member with at least one terminal of the headset plug near a head of the headset plug. As shown in Fig. 11, the headset plug 1101 is firstly inserted into the headset jack 1102, and then the sleeve 1103 is put on the head of the headset plug 1101. At this time, the pins 1104 and 1105 of the sleeve are respectively in contact with the two terminals 1106 and 1107 of the headset plug 1101 near the head. Moreover, the pins 1104 and 1105 of the sleeve 1103 are respectively in contact with corresponding contact points in the headset jack 1102 (the contact points in the headset jack are not shown in the drawing). In this embodiment, the headset plug is fully inserted into the headset jack with a shallower depth, and the terminals of the headset plug 1101 protruding out of the headset jack 1102 are in contact with the contact points in the headset jack 1102 via the pins of the connection member 1103. Therefore, the required depth of the headset jack can become relatively small, and thereby, the terminal device configured with this headset jack may be set relatively thin.

In other embodiments of the present disclosure, the connection member may be for example a clamp with a pin for clamping the terminal of the headset plug so as to be connected to the headset plug and for contacting the pin with the terminal of the clamped headset plug.

The present disclosure also provides a headset jack cooperating with the aforesaid connection member and having at least one contact point. When the headset plug is inserted into the headset jack, and the headset plug is connected with the connection member, said at least one contact point makes contact with at least one pin of the connection member. The connection member is configured as follows: when the connection member is connected to the headset plug, at least one pin of the connection member makes contact with at least one terminal of the headset plug near an end portion thereof.

The depth of the headset jack is the sum of widths of the terminals of the headset plug except the terminals makes contact with the pins of the connection member when the headset plug is connected to the connection member.

The at least one contact point may be located at an end portion of the headset jack or within a channel of the headset jack. Fig. 12 illustrates a schematic diagram of one embodiment of the headset jack. Fig. 12 is a top view of the headset jack, wherein the reference sign 1201 indicates the headset jack with a hollow center portion 1202 for inserting the headset plug, and the contact points 1203 and 1204 are located at the end portion of the headset jack 1201 for contact with the pins of the connection member. In other embodiments of the present disclosure, the contact points may be located within the center portion 1202.

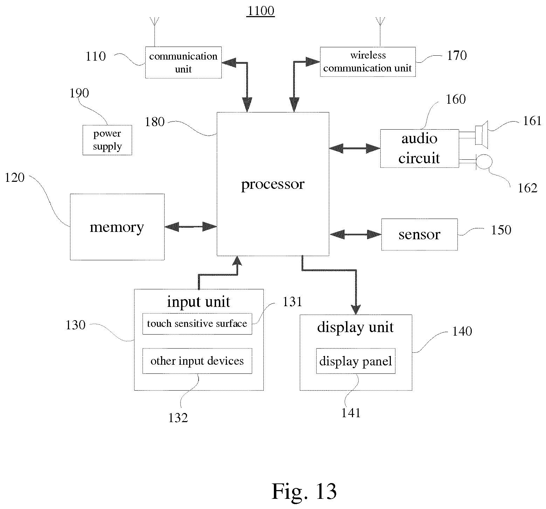

The present disclosure also provides a terminal device. FIG 13 is a structural diagram of a terminal device provided by the present disclosure. Referring to Fig. 13, the terminal device 1100 may include a communication unit 110, a memory 120 including one or more computer-readable storage medium, an input unit 130, a display unit 140, a sensor 150, an audio circuit 160, a WiFi (wireless fidelity) module 170, a processor 180 including one or more processing cores, a power supply 190, and other components. The person skilled in the art should appreciate that the structure of the terminal device shown in Fig. 13 does not constitute the limitation to the terminal device, but may include more or less components than those shown in the drawing, or may combine some of the components, or may have different arrangement of the components.

The communication unit 110 is configured to receive and transmit signals during information receipt and transmission or during a call. The communication unit 110 may be a RF (radio frequency) circuit, a router, a modem, or other network communication device. Specifically, in the case that the communication unit 110 is the RF circuit, after receiving the downlink information from the base station, the one or more processors 780 processes the downlink information; additionally, the uplink data is transmitted to the base station. Generally, the RF circuit serving as the communication unit includes, but is not limited to an antenna, at least one amplifier, a tuner, one or more oscillators, a subscriber identity module (SIM) card, a transceiver, a coupler, a LNA (Low Noise Amplifier), a duplexer, etc. Additionally, the communication unit 110 may also communicated with network and other devices via wireless communication. The wireless communication may adopt any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service), etc. The memory 120 may be configured to store software programs and modules, and the processor 180 performs various functional applications and data processing by executing the software programs and modules stored in the memory 120. The memory 120 may mainly include a program storage region and a data storage region, wherein the program storage region may store an operation system, an application program required by at least one function (such as an audio playing function, an image playback function) and the like; and the data storage region may store the data created according to the usage of the terminal device 1100 (such as audio data, a phone book) and the like. In addition, the memory 120 may include a high random access memory, and may also include a non-transitory memory, such as at least one disc storage device, flash device or other transitory solid-state storage device. Accordingly, the memory 120 may also include a memory controller for providing the processor 180 and the input unit 130 with an access to the memory 120.

The input unit 130 may be configured to receive the input digits or character information, and generate signal inputs of a keyboard, a mouse, a joystick or a trackball related to the user settings and function control. Preferably, the input unit 130 may include a touch sensitive surface 131 and other input devices 132. The touch sensitive surface 131, which is also be referred to as a touch screen or a touch pad, can collect the user's touch operation thereon or thereabout (for example, the user performs operations on the touch sensitive surface 131 or near the touch sensitive surface 131 by using fingers, a stylus, or any suitable object or accessory), and drive the corresponding connected device according to the preset program. Optionally, the touch sensitive surface 131 may include two parts, i.e., a touch detection device and a touch controller, wherein the touch detection device detects a touch orientation of the user and signals caused by the touch operation, and transmits the signals to the touch controller; and the touch controller receives the touch information from the touch detection device, converts the touch information into a contact coordinate and transmits it to the processor 180, and the touch controller can also receive the instruction from the processor 180 and execute the instruction. Additionally, the touch sensitive surface 131 may be achieved by adopting various types, such as a resistive type, a capacitive type, an infrared ray type, and a surface acoustic wave type. Besides the touch sensitive surface 131, the input unit 130 may also include other input device 132. The other input devices 132 may include but not limited to one or more of a physical keyboard, a function key (such as a volume control key, a switch key), a trackball, a mouse, a joystick, etc.

The display unit 140 may be configured to display information input by the user or information provided to the user and various kinds of graphical user interfaces of the terminal device 1100, and the graphical user interfaces may be constituted by a graphic, a text, an icon, a video and any combination thereof. The display unit 140 may include a display panel 141. Optionally, the display panel 141 may be configured in the form of a LCD (Liquid Crystal Display), an OLED (Organic Light-Emitting Diode) and the like. Further, the touch sensitive surface 131 may cover the display panel 141. When the touch operation on or near the touch sensitive surface 131 is detected, the touch sensitive surface 131 transmits the touch operation to the processor 180 to determine the type of the touch event, and then the processor 180 provides a corresponding visual output on the display panel 141 according to the type of the touch event. Although in Fig. 13, the touch sensitive surface 131 and the display panel 141 act as two independent components to achieve input and input functions, in some embodiments, the touch sensitive surface 131 and the display panel 141 may be integrated to achieve the input and output functions.

The terminal device 1100 may further include at least one sensor 150, such as a light sensor, a motion sensor, and other sensors. The light sensor may include an ambient light sensor and a proximity sensor, wherein the ambient light sensor may adjust the brightness of the display panel 141 according to the light and shade of the ambient light, and the proximity sensor may turn off the display panel 141 and/or the backlight when the terminal device 1100 is moved to the ear. As one type of the motion sensors, the gravity acceleration sensor may detect the magnitude of the acceleration along respective directions (in general, three axes), may detect the magnitude and direction of the gravity when being stationary, and may identify the applications of the attitudes of the mobile phone (such as a horizontal and vertical screen switching, a relevant game, a magnetometer attitude calibration) and functions relevant to vibration identification (such as a pedometer, a percussion) and the like. The terminal device 1100 may also be configured with a gyroscope, a barometer, a hygrometer, a thermometer, an infrared sensor and other sensors, which are not repeated herein.

The audio circuit 160, a speaker 161 and a microphone 162 may provide the audio interfaces between the user and the terminal device 1100. The audio circuit 160 may transmit an electrical signal converted from the received audio data to the speaker 161, and the speaker 161 converts the electrical signal into an acoustical signal and outputs it. On the other hand, the microphone 162 converts the collected acoustical signal into an electrical signal, the audio circuit 160 receives the electrical signal, converts it into an audio signal, and output the audio signal to the processor 180 for being processed, then the processed audio signal is for example transmitted to another terminal device via the RF circuit 110, or the audio signal is output to the memory 120 for further processing. The audio circuit 160 may also include a headset jack for providing the communication between the peripheral headset and the terminal device 1100. The headset jack of the present disclosure has at least one contact point. When the headset plug is inserted into the headset jack, and the headset plug is connected with the connection member, said at least one contact point is connected to at least one pin of the connection member. The connection member is configured as follows: when the connection member is connected to the headset plug, at least one pin of the connection member makes contact with at least one terminal of the headset plug near the end portion thereof.

The depth of the headset jack is the sum of the widths of the terminals of the headset plug except the terminals in contact with the pins of the connection member when the headset plug is connected to the connection member.

The at least one contact point may be located at the end portion of the headset jack of the terminal device or within the channel of the headset jack of the terminal device.

In order to achieve the wireless communication, the wireless communication unit 170 may be provided on the terminal device. The wireless communication unit 170 may be a WiFi module. The WiFi belongs to the short-range wireless transmission technology. The terminal device 1100 may assist the user to send and receive E-mails, browse the web, access the streaming media and the like via the wireless communication unit 170, and provide the user with the wireless broadband Internet access. Although the wireless communication unit 170 is shown in the drawing, it may be appreciated that the wireless communication unit 170 is not a necessary constitution of the terminal device 1100, and can be omitted according to requirements.

The processor 180 is a control center of the terminal device 1100. The processor 180 connects respective parts of the entire mobile phone via various interfaces and wirings, and performs various functions of the terminal device 1100 and processes data so as to wholly monitor the mobile phone, by running or executing the software programs and/or modules within the memory 120 and calling the data stored in the memory 120. Optionally, the processor 180 may include one or more processing cores. Preferably, the processor 180 may integrate with the application processor and the modem processor, wherein the application processor mainly processes the operation system, the user interface, the application program, etc., and the modem processor mainly processes the wireless communication. It may be appreciated that the modem processor may not be integrated into the processor 180.

The terminal device 1100 further includes a power supply 190 (such as a battery) for supplying power to respective components. Preferably, the power supply may be connected to the processor 180 logically via a power management system, so as to achieve the functions of a charge management, a discharge management and a power consumption management by the power management system. The power supply 190 may also include any components, such as one or more direct current or alternative current power supplies, recharging systems, power failure detection circuits, power converters or inverters, and power status indicators.

Although not shown in the drawing, the terminal device 1100 may also include a camera, a Bluetooth module, and the like, which are not repeated herein. In the present embodiment, the display unit of the terminal device is a touch screen display, and the terminal device further includes a memory and one or more programs which are stored in the memory and are configured to be executed by the one or more processors.

In addition, typically, the mobile terminal device described in the present disclosure may be various handheld terminal devices, such as a mobile phone, and a personal digital assistant (PDA). Thereby, the present disclosure is not intended to be restricted to any specific type of mobile terminal device.

Additionally, the method according to the present disclosure may be implemented as the computer program executed by CPU. When the computer program is executed by the CPU, the above functions defined in the method of the present disclosure are performed.

Furthermore, the above steps in the method and the units in the system may also be realized by using the controller and the computer-readable storage medium which stores the computer program for causing the controller to achieve the above steps or unit functions.

Moreover, it should be understood that the computer-readable storage medium (such as the memory) described in the present disclosure may be a transitory or non-transitory memory, or a combination thereof. As an example and not restrictive, the non-transitory memory may include a read-only memory (ROM), a programmable ROM (PROM), an erasable programmable ROM (EPROM), an electrically erasable programmable ROM (EEPROM), or a flash memory. The transitory memory may include a random access memory (RAM) which can act as an external cache memory. As an example and not restrictive, RAM may be obtained in various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), and a direct RambusRAM (DRRAM). The storage devices in the aspects of the present disclosure are intended to include, but not limited to, these and any other suitable types of memory.

The person skilled in the art should also understand that the various illustrative logical blocks, modules, circuits and algorithm steps described in combination with the contents disclosed herein may be implemented as an electronic hardware, computer software or a combination thereof. In order to clearly explain the interchangeability between the hardware and the software, a general description has been given in terms of the functions of various illustrative components, blocks, modules, circuits and steps. These functions are implemented as the software or implemented as the hardware depending on the particular applications and the design constraints imposed to the whole system.

The various illustrative logical blocks, modules and circuits described in combination with the contents disclosed herein may be realized or executed by the following components which are designed for executing the above functions: a general purpose processor, a digital signal processor (DSP), an application specific IC (ASIC), a field programmable gate array (FPGA), or other programmable logic devices, a discrete gate, or a transistor logic, a discrete hardware element or any combination thereof. The general purpose processor may be a microprocessor. Alternatively, the processor may be any conventional processor, controller, microcontroller or state machine. The processor may also be implemented as a combination of the computing devices, such as a combination of a DSP and a microprocessor, a plurality of microprocessors, one or more microprocessor combined with a DSP core, or any other such configurations.

The steps of the method or algorithm described in combination with the contents disclosed herein may be directly included in the hardware, in the software module executed by the processor, or in a combination thereof. The software module may reside in a RAM, a flash memory, a ROM, an EPROM, an EEPROM, a register, a hard disk, a removable disk, a CD-ROM, or any other storage mediums of any forms known in the art. The exemplary storage medium is coupled to the processor such that the processor can read information from the storage medium or write information into the storage medium. In an alternative solution, the storage medium may be integrated to the processor. The processor and the storage medium may reside in an ASIC. The ASIC may reside in a user terminal. In an alternative solution, the processor and the storage medium may reside in the user terminal as discrete components.

In one or more exemplary designs, the functions may be implemented in hardware, software, firmware, or any combination thereof. If the functions are implemented in software, the functions may be stored in the computer-readable storage medium or may be transmitted by the computer-readable medium as one or more instructions or codes. The computer-readable medium includes a computer storage medium and a communication medium, and the communication medium includes any medium assisting the transmission of the computer program from one place to another place. The storage medium may be any available medium which is able to be accessed by a general purpose or special purpose computer. As an example and not restrictive, the computer-readable medium may include a RAM, a ROM, an EEPROM, a CD-ROM or other optical disc storage devices, magnetic disc storage devices or other magnetic storage devices, or may be any other media which are used to carry or store the desired program codes in the form of instructions or data structures and can be accessed by a general purpose or special purpose computer or a general purpose or special purpose processor. Also, any linking may be properly referred to as the computer-readable medium. For example, if sending the software from a website, a server, or other remote sources by a coaxial cable, a fiber optic cable, a twisted pair, a digital subscriber line (DSL), or a wireless technology such as an infrared, a radio and a microwave technologies, the above coaxial cable, fiber optic cable, twisted pair, DSL, or wireless technology such as the infrared, the radio and the microwave technologies are included in the definition of the media. As used herein, the magnetic disc and the optical disc include a compact disc (CD), a laser disc, an optical disc, a digital versatile disc (DVD), a floppy disc and a blue-ray disc, wherein the magnetic disc usually reproduces data magnetically, while the optical disc reproduces data optically with lasers. The combinations of the above contents should also be included within the scope of the computer-readable medium.

The above-mentioned specific embodiments further explain the purposes, technical solutions and advantageous effects of the present disclosure in detail, and it should be understood that the above contents are only specific implementations of the present disclosure, but are not intended to limit the present disclosure.

## Claims

1. A connection member (501; 801; 1103) for connection with a headset plug (601; 901; 1101), the headset plug defined by head end and a tail end portion thereof with at least one terminal arranged therebetween, each terminal defined by a width;
**characterized in that**, the connection member is adapted to reduce the length of the portion of the headset plug to be inserted into a corresponding headset jack (602; 902; 1102), and so reduce the effective depth "m" of the headset jack, when connected with the headset plug,
wherein, the connection member (501; 801; 1103) is defined by a hollow sleeve, having an inner diameter "r" adapted to receive an end portion of the headset plug (601; 901; 1101),
and wherein the connection member has at least one pin (503; 803,804; 1104,1105) extending from an end portion thereof, so that when the connection member is connected with the headset plug, the at least one pin makes contact with at least one terminal of the headset plug inserted into the corresponding headset jack,
and the height "h" of the sleeve being greater than or equal to the sum of widths of the terminals (806,805; 1106,1107) of the headset plug not inserted into the corresponding headset jack.

2. The connection member (501) according to claim 1, wherein, the pin (503) is a clip.

3. The connection member according to claim 1, wherein, when the connection member (801) is used for connecting to a four-stage headset plug, the connection member has two pins (803,804), and when the connection member is connected with the headset plug (901), the two pins are respectively in contact with two terminals of the headset plug near the head end or the tail end portion of the headset plug.

4. A headset jack (602; 902; 1102) adapted to receive a headset plug (601; 901; 1101), the headset plug defined by head end and a tail end portion thereof with at least one terminal arranged therebetween, each terminal defined by a width;
**characterized in that**, the headset jack has at least one contact point (1203,1204), and when the headset plug (601; 901; 1101) has been connected with a connection member (501; 801; 1103) defined by a hollow sleeve having an inner diameter "r" adapted to receive an end portion of the headset plug (601; 901; 1101), and is not fully inserted into the headset jack, the at least one contact point makes contact with a pin or pins (503; 803,804; 1104,1105) extending from the connection member, wherein the connection member is configured such that a respective pin thereof makes contact with at least one terminal of the headset plug near a head end or a tail end portion of the headset plug, whereby a terminal of the headset plug which is not inserted into the headset jack makes contact with the contact point in the headset jack via at least one pin of the connection member;
and wherein, the effective depth "m" of the headset jack (602; 902; 1102) is the sum of widths of the terminals of the headset plug (601; 901; 1101) minus the widths of the terminals in contact with the pins of the connection member (501; 801; 1103) when the headset plug is connected to the connection member.

5. The headset jack (602; 902; 1102) according to claim 4, wherein, the at least one contact point (1203,1204) is located at an end portion of the headset jack or within a channel of the headset jack, for contact with a respective pin of the connection member.

6. A terminal device (1100), **characterized in that**, the terminal device comprises a headset jack (602; 902; 1102) adapted to receive a headset plug (601; 901; 1101), the headset plug defined by head end and a tail end portion thereof with at least one terminal arranged therebetween, each terminal defined by a width;
wherein, the headset jack has at least one contact point (1203,1204), and when the headset plug (601; 901; 1101) has been connected with a connection member (501; 801; 1103) defined by a hollow sleeve having an inner diameter "r" adapted to receive an end portion of the headset plug (601; 901; 1101), and is not fully inserted into the headset jack, the at least one contact point makes contact with a pin or pins (503; 803,804; 1104,1105) extending from the connection member, wherein the connection member is configured such that a respective pin thereof makes contact with at least one terminal of the headset plug near a head end or a tail end portion of the headset plug, whereby a terminal of the headset plug which is not inserted into the headset jack makes contact with the contact point in the headset jack via the at least one pin of the connection member;
and wherein, the effective depth "m" of the headset jack (602; 902; 1102) is the sum of widths of the terminals of the headset plug (601; 901; 1101) minus the widths of the terminals in contact with the pins of the connection member (501; 801; 1103) when the headset plug is connected to the connection member.

7. The terminal device according to claim 6, wherein, the at least one contact point (1203,1204) is located at an end portion of the headset jack (602; 902; 1102) of the terminal device (1100) or within a channel of the headset jack of the terminal device, for contact with a respective pin of the connection member.

## Patentansprüche

1. Verbindungselement (501; 801; 1103) zur Verbindung mit einem Kopfhörerstecker (601; 901; 1101), wobei der Kopfhörerstecker von einem vorderen Endabschnitt und einem hinteren Endabschnitt desselben definiert wird, zwischen denen mindestens ein Pol angeordnet ist, wobei jeder Pol von einer Breite definiert wird;
**dadurch gekennzeichnet, dass** das Verbindungselement dazu angeordnet ist, die Länge des in eine entsprechende Kopfhörerbuchse (602; 902; 1102) einzusteckenden Abschnitts zu verringern und so die effektive Tiefe "m" der Kopfhörerbuchse, wenn sie mit dem Kopfhörerstecker verbunden ist, zu verringern,
wobei das Verbindungselement (501; 801; 1103) von einer hohlen Hülse definiert wird, die einen Innendurchmesser "r" aufweist, der dazu angepasst ist, einen Endabschnitt des Kopfhörersteckers (601; 901; 1101) aufzunehmen,
und wobei das Verbindungselement mindestens einen Kontaktstift (503; 803, 804; 1104, 1105) aufweist, der sich von einem Endabschnitt desselben erstreckt, sodass, wenn das Verbindungselement mit dem Kopfhörerstecker verbunden ist, der mindestens eine Kontaktstift einen Kontakt mit mindestens einem Pol des in die entsprechende Kopfhörerbuchse eingesteckten Kopfhörersteckers herstellt,
und wobei die Höhe "h" der Hülse größer oder gleich der Summe der Breiten der Pole (806, 805; 1106, 1107) des nicht in die entsprechende Kopfhörerbuchse eingesteckten Kopfhörersteckers ist.

2. Verbindungselement (501) nach Anspruch 1, wobei es sich bei dem Kontaktstift (503) um einen Clip handelt.

3. Verbindungselement nach Anspruch 1, wobei, wenn das Verbindungselement (801) zum Verbinden mit einem vierstufigen Kopfhörerstecker verwendet wird, das Verbindungselement zwei Kontaktstifte (803, 804) aufweist und, wenn das Verbindungselement mit dem Kopfhörerstecker (901) verbunden ist, sich die zwei Kontaktstifte mit zwei Polen des Kopfhörersteckers in der Nähe des vorderen Endabschnitts bzw. des hinteren Endabschnitts des Kopfhörersteckers in Kontakt befinden.

4. Kopfhörerbuchse (602; 902; 1102), die dazu angepasst ist, einen Kopfhörerstecker (601; 901; 1101) aufzunehmen, wobei der Kopfhörerstecker von einem vorderen Endabschnitt und einem hinteren Endabschnitt desselben definiert wird, zwischen denen mindestens ein Pol angeordnet ist, wobei jeder Pol von einer Breite definiert wird;
**dadurch gekennzeichnet, dass** die Kopfhörerbuchse mindestens eine Kontaktstelle (1203, 1204) aufweist und, wenn der Kopfhörerstecker (601; 901; 1101) mit einem Verbindungselement (501; 801; 1103) verbunden wurde, das von einer hohlen Hülse mit einem zum Aufnehmen eines Endabschnitts des Kopfhörersteckers (601; 901; 1101) angepassten Innendurchmesser "r" definiert wird, und nicht vollständig in die Kopfhörerbuchse eingesteckt ist, die mindestens eine Kontaktstelle einen Kontakt mit einem Kontaktstift oder Kontaktstiften (503; 803, 804; 1104, 1105), der bzw. die sich von dem Verbindungselement erstreckt bzw. erstrecken, herstellt, wobei das Verbindungselement derart konfiguriert ist, dass ein jeweiliger Kontaktstift desselben einen Kontakt mit mindestens einem Pol des Kopfhörersteckers in der Nähe eines vorderen Endabschnitts oder eines hinteren Endabschnitts des Kopfhörersteckers herstellt, wodurch ein Pol des Kopfhörersteckers, der nicht in die Kopfhörerbuchse eingesteckt ist, über mindestens einen Kontaktstift des Verbindungselements einen Kontakt mit der Kontaktstelle in der Kopfhörerbuchse herstellt;
und wobei die effektive Tiefe "m" des Kopfhörersteckers (602; 902; 1102) die Summe der Breiten der Pole des Kopfhörersteckers (601; 901; 1101) minus der Breiten der sich mit den Kontaktstiften des Verbindungselements (501; 801; 1103) in Kontakt befindlichen Pole ist, wenn der Kopfhörerstecker mit dem Verbindungselement verbunden ist.

5. Kopfhörerbuchse (602; 902; 1102) nach Anspruch 4, wobei sich die mindestens eine Kontaktstelle (1203, 1204) für den Kontakt mit einem jeweiligen Kontaktstift des Verbindungselements an einem Endabschnitt der Kopfhörerbuchse oder innerhalb einer Nut der Kopfhörerbuchse befindet.

6. Endgerätvorrichtung, **dadurch gekennzeichnet, dass** die Endgerätvorrichtung eine Kopfhörerbuchse (602; 902; 1102) umfasst, die dazu angepasst ist, einen Kopfhörerstecker (601; 901; 1101) aufzunehmen, wobei der Kopfhörerstecker von einem vorderen Endabschnitt und einem hinteren Endabschnitt desselben definiert wird, zwischen denen mindestens ein Pol angeordnet ist, wobei jeder Pol von einer Breite definiert wird;
wobei die Kopfhörerbuchse mindestens eine Kontaktstelle (1203, 1204) aufweist und, wenn der Kopfhörerstecker (601; 901; 1101) mit einem Verbindungselement (501; 801; 1103) verbunden wurde, das von einer hohlen Hülse mit einem zum Aufnehmen eines Endabschnitts des Kopfhörersteckers (601; 901; 1101) angepassten Innendurchmesser "r" definiert wird, und nicht vollständig in die Kopfhörerbuchse eingesteckt ist, die mindestens eine Kontaktstelle einen Kontakt mit einem Kontaktstift oder Kontaktstiften (503; 803, 804; 1104, 1105), der bzw. die sich von dem Verbindungselement erstreckt bzw. erstrecken, herstellt, wobei das Verbindungselement derart konfiguriert ist, dass ein jeweiliger Kontaktstift desselben einen Kontakt mit mindestens einem Pol des Kopfhörersteckers in der Nähe eines vorderen Endabschnitts oder eines hinteren Endabschnitts des Kopfhörersteckers herstellt, wodurch ein Pol des Kopfhörersteckers, der nicht in die Kopfhörerbuchse eingesteckt ist, über den mindestens einen Kontaktstift des Verbindungselements einen Kontakt mit der Kontaktstelle in der Kopfhörerbuchse herstellt;
und wobei die effektive Tiefe "m" des Kopfhörersteckers (602; 902; 1102) die Summe der Breiten der Pole des Kopfhörersteckers (601; 901; 1101) minus der Breiten der sich mit den Kontaktstiften des Verbindungselements (501; 801; 1103) in Kontakt befindlichen Pole ist, wenn der Kopfhörerstecker mit dem Verbindungselement verbunden ist.

7. Endgerätvorrichtung nach Anspruch 6, wobei sich die mindestens eine Kontaktstelle (1203, 1204) für den Kontakt mit einem jeweiligen Kontaktstift des Verbindungselements an einem Endabschnitt der Kopfhörerbuchse (602; 902; 1102) der Endgerätvorrichtung (1100) oder innerhalb einer Nut der Kopfhörerbuchse der Endgerätvorrichtung befindet.

## Revendications

1. Elément de connexion (501 ; 801 ; 1103) destiné à être connecté à une prise de casque (601 ; 901 ; 1101), la prise de casque étant définie par une partie d'extrémité de tête et une partie d'extrémité de queue de celle-ci avec au moins une borne agencée entre elles, chaque borne étant définie par une largeur ;
**caractérisé en ce que** l'élément de connexion est adapté pour réduire la longueur de la partie de la prise de casque destinée à être insérée dans un jack de casque correspondant (602 ; 902 ; 1102), et ainsi réduire la profondeur effective "m" du jack de casque, quand il est connecté à la prise de casque,
dans lequel l'élément de connexion (501 ; 801 ; 1103) est défini par un manchon creux, ayant un diamètre interne "r" adapté pour recevoir une partie d'extrémité de la prise de casque (601 ; 901 ; 1101),
et dans lequel l'élément de connexion comporte au moins une broche (503 ; 803, 804 ; 1104, 1105) s'étendant depuis une partie d'extrémité de celui-ci, de telle sorte que, quand l'élément de connexion est connecté à la prise de casque, l'au moins une broche fasse contact avec au moins une borne de la prise de casque insérée dans le jack de casque correspondant,
et la hauteur "h" du manchon étant supérieure ou égale à la somme des largeurs des bornes (806, 805 ; 1106, 1107) de la prise de casque non insérée dans le jack de casque correspondant.

2. Elément de connexion (501) selon la revendication 1, dans lequel, la broche (503) est un clip.

3. Elément de connexion selon la revendication 1, dans lequel, quand l'élément de connexion (801) est utilisé pour une connexion à une prise de casque à quatre étages, l'élément de connexion comporte deux broches (803, 804), et quand l'élément de connexion est connecté à la prise de casque (901), les deux broches sont respectivement en contact avec deux bornes de la prise de casque près la partie d'extrémité de tête ou d'extrémité de queue de la prise de casque.

4. Jack de casque (602 ; 902 ; 1102) adapté pour recevoir une prise de casque (601 ; 901 ; 1101), la prise de casque étant définie par une partie d'extrémité de tête et une partie d'extrémité de queue de celle-ci avec au moins une borne agencée entre elles, chaque borne étant définie par une largeur ;
**caractérisé en ce que** le jack de casque comporte au moins un point de contact (1203, 1204), et quand la prise de casque (601 ; 901 ; 1101) a été connectée à un élément de connexion (501 ; 801 ; 1103) défini par un manchon creux ayant un diamètre interne "r" adapté pour recevoir une partie d'extrémité de la prise de casque (601 ; 901 ; 1101), et n'est pas complètement insérée dans le jack de casque, l'au moins un point de contact fait contact avec une ou des broches (503 ; 803, 804 ; 1104, 1105) s'étendant depuis l'élément de connexion, dans lequel l'élément de connexion est configuré de telle sorte qu'une broche respective de celui-ci fasse contact avec au moins une borne de la prise de casque près d'une partie d'extrémité de tête ou une partie d'extrémité de queue de la prise de casque, si bien qu'une borne de la prise de casque qui n'est pas insérée dans le jack de casque fait contact avec le point de contact dans le jack de casque par l'intermédiaire d'au moins une broche de l'élément de connexion ;
et dans lequel, la profondeur effective "m" du jack de casque (602 ; 902 ; 1102) est la somme de largeurs des bornes de la prise de casque (601 ; 901 ; 1101) moins les largeurs des bornes en contact avec les broches de l'élément de connexion (501 ; 801 ; 1103) quand la prise de casque est connectée à l'élément de connexion.

5. Jack de casque (602 ; 902 ; 1102) selon la revendication 4, dans lequel, l'au moins un point de contact (1203, 1204) est situé à une partie d'extrémité du jack de casque ou dans un canal du jack de casque, en vue du contact avec une broche respective de l'élément de connexion.

6. Dispositif terminal (1100), **caractérisé en ce que** le dispositif terminal comprend un jack de casque (602 ; 902 ; 1102) adapté pour recevoir une prise de casque (601 ; 901 ; 1101), la prise de casque étant définie par une partie d'extrémité de tête et une partie d'extrémité de queue de celle-ci avec au moins une borne agencée entre elles, chaque borne étant définie par une largeur ;
dans lequel le jack de casque comporte au moins un point de contact (1203, 1204), et quand la prise de casque (601 ; 901 ; 1101) a été connectée à un élément de connexion (501 ; 801 ; 1103) défini par un manchon creux ayant un diamètre interne "r" adapté pour recevoir une partie d'extrémité de la prise de casque (601 ; 901 ; 1101), et n'est pas complètement insérée dans le jack de casque, l'au moins un point de contact fait contact avec une ou des broches (503 ; 803, 804 ; 1104, 1105) s'étendant depuis l'élément de connexion, dans lequel l'élément de connexion est configuré de telle sorte qu'une broche respective de celui-ci fasse contact avec au moins une borne de la prise de casque près d'une partie d'extrémité de tête ou d'une partie d'extrémité de queue de la prise de casque, si bien qu'une borne de la prise de casque qui n'est pas insérée dans le jack de casque fait contact avec le point de contact dans le jack de casque par l'intermédiaire d'au moins une broche de l'élément de connexion ;
et dans lequel, la profondeur effective "m" du jack de casque (602 ; 902 ; 1102) est la somme de largeurs des bornes de la prise de casque (601 ; 901 ; 1101) moins les largeurs des bornes en contact avec les broches de l'élément de connexion (501 ; 801 ; 1103) quand la prise de casque est connectée à l'élément de connexion.

7. Dispositif terminal selon la revendication 6, dans lequel, l'au moins un point de contact (1203, 1204) est situé à une partie d'extrémité du jack de casque (602 ; 902 ; 1102) du dispositif terminal (1100) ou dans un canal du jack de casque du dispositif terminal, en vue de faire contact avec une broche respective de l'élément de connexion.
